# EUROPÄISCHE PATENTSCHRIFT

(11) **EP 3 302 189 B1**
(45) Veröffentlichungstag und Bekanntmachung des Hinweises auf die Patenterteilung: **22.09.2021**
(21) Anmeldenummer: 16715538.1
(22) Anmeldetag: 11.04.2016
(51) Int. Cl.: A47J 31/60, A47J 31/46

(54) **GETRÄNKEAUTOMAT**
DRINKS MACHINE
DISTRIBUTEUR AUTOMATIQUE DE BOISSONS

(30) Priorität: 29.05.2015 DE 102015209986
(43) Veröffentlichungstag der Anmeldung: 11.04.2018
(73) Patentinhaber: BSH Hausgeräte GmbH, 81739 München (DE)
(72) Erfinder: BREZOVNIK, Peter, 3330 Mozirje (SI); GOLCMAN, Damjan, 3327 Smartno ob Paki (SI); OGRIZEK, Bostjan, 3320 Velenje (SI); HALMBACHER, Josef, 84524 Neuötting (DE)
(86) Internationale Anmeldenummer: PCT/EP2016/057905
(87) Internationale Veröffentlichungsnummer: WO 2016/192878

(56) Entgegenhaltungen:
- WO-A1-2010/006953
- WO-A1-2011/140582
- WO-A2-2008/017495

## Beschreibung

Die vorliegende Erfindung betrifft einen Getränkeautomaten mit einem Flüssigkeitstank und einem Auslassstutzen.

Moderne Getränkeautomaten benötigen zur Herstellung komplexer Mischgetränke äußerst genaue Durchflussmengenmesser, um die einzelnen Bestandteile des jeweiligen Mischgetränks exakt festlegen zu können. Jedoch nicht nur für die Herstellung komplexer Mischgetränke sind derartige Durchflussmengenmesser erforderlich, sondern selbst für die Herstellung eines gewöhnlichen Espressos, da dessen Geschmack unmittelbar von der verwendeten Wassermenge abhängt. Da die hierfür verwendeten Durchflussmengenmesser jedoch sehr kleine Querschnitte haben, können bereits geringste Verschmutzungen zu einem Ausfall derselben oder aber zu Messungenauigkeiten führen, wodurch die hergestellten Getränke erheblich an Qualität verlieren.

Um dies zu verhindern, wird oftmals ein Filter eingesetzt, welches stromauf des Durchflussmengenmessers angeordnet ist und das dem Durchflussmengenmesser zugeleitete Fluid, beispielsweise Wasser, zuvor reinigt. Da beispielsweise die Espressoherstellung vergleichsweise hohe Drücke erfordert, sind moderne Kaffeeautomaten zudem mit Sicherheitsventilen ausgestattet, die bei Überschreiten eines vordefinierten Grenzdrucks öffnen und damit für einen Druckabbau sorgen. Diese Sicherheitsventile sind oftmals über eine Rücklaufleitung mit einer Zulaufleitung zur Brüheinheit verbunden, um das bereits erhitzte Wasser energiesparend für die Bereitung eines weiteren Kaffeegetränks nutzen zu können. Eine derartige Rücklaufleitung mündet dabei stromauf des Durchflussmengenmessers in die Zulaufleitung, um auch für die weiteren herzustellenden Getränke die optimale Flüssigkeitsmenge bestimmen zu können.

Derartige Getränkeautomaten sind beispielsweise bekannt aus den Lehren der Druckschriften WO 2011/140582 A1, US 2015/245736 A1, WO 2010/006953 A1 und WO 2008/017495 A2.

Nachteilig bei den bekannten Ausführungsformen ist dabei jedoch, dass das über die Rücklaufleitung zurückfließende Wasser unter Umständen Kalkablagerungen mit sich führen kann, welche dann unmittelbar in den Durchflussmengenmesser gelangen, da die Rücklaufleitung erst stromab des eigentlichen Filters in die Zulaufleitung mündet.

Die vorliegende Erfindung beschäftigt sich daher mit dem Problem, für einen Getränkeautomaten eine verbesserte Ausführungsform anzugeben, welche insbesondere den aus dem Stand der Technik bekannten Nachteil überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem Getränkeautomaten mit einem Flüssigkeitstank und einem Auslassstutzen zwei Filter vorzusehen, nämlich eine Art Vorfilter stromauf des Auslassstutzens und eine Art Feinfilter zwischen dem Auslassstutzen und dem Durchflussmengenmesser. Zudem ist eine ohnehin aus dem Stand der Technik bekannte Rücklaufleitung vorgesehen, die in den Zulauf zum Durchflussmengenmesser zwischen den beiden Filtern einmündet. Die Einmündung ist dabei im Auslassstutzen vorgesehen, das heißt stromab des ersten Filters und stromauf des zweiten Filters. Durch die erfindungsgemäße Anordnung der beiden Filter und Ausbildung des Auslassstutzens kann die aus dem Flüssigkeitstank entnommene Flüssigkeit über das erste Filter vorgefiltert und anschließend nach dem Verlassen des Auslassstutzens über das zweite Filter nochmals gereinigt werden, bevor die Flüssigkeit durch den Durchflussmengenmesser strömt. Kommt hingegen Flüssigkeit über die Rücklaufleitung, beispielsweise aufgrund eines Überdrucks oder einer Übermenge, von einer Brüheinheit zurück, so wird diese in den Auslassstutzen eingespeist und durchläuft, bevor sie zum Durchflussmengenmesser gelangt, das zweite Filter nochmals. Die über die Rücklaufleitung zurückströmende Flüssigkeit, beispielsweise Wasser, wird somit insgesamt dreimal gefiltert, indem sie einmal durch das erste Filter und zweimal durch das feinere zweite Filter geleitet wird. Mit dieser Ausführungsform kann auf jeden Fall verhindert werden, dass beispielsweise gelöste Kalkablagerungen aus der Brüheinheit bzw. aus der Rücklaufleitung ungefiltert zum Durchflussmengenmesser gelangen und diesen unter Umständen beeinträchtigen oder sogar beschädigen können. Zweckmäßig ist das erste Filter innerhalb des Flüssigkeitstanks angeordnet. Dies stellt eine besonders gute Möglichkeit dar, ein vergleichsweise großes Filter platzsparend unterbringen zu können, wobei die Anordnung des ersten Filters im Flüssigkeitstank zudem eine große Filterfläche erlaubt. Auch kann hierdurch eine leichte Zugänglichkeit gewährleistet werden, da der Wassertank leicht zu öffnen ist.

Bei einer vorteilhaften Weiterbildung der erfindungsgemäßen Lösung weist das zweite Filter eine geringere Porengröße auf als das erste Filter. Das zweite Filter ist somit im Vergleich zum ersten Filter ein Feinfilter, wogegen das erste Filter als Vorfilter bezeichnet werden könnte. Eine derartige Ausbildung der beiden Filter trägt dem Umstand Rechnung, dass das über die Rücklaufleitung rückströmende Wasser oder generell die Flüssigkeit bereits zweimal gefiltert wurde und deshalb nur nochmals durch das zweite Filter geleitet werden muss.

Zweckmäßig ist der Flüssigkeitstank als Wassertank ausgebildet. Einen derartigen Wassertank gibt es in jedem Getränkeautomaten, insbesondere in Kaffeeautomaten, wobei gerade hier zur Herstellung komplexer Kaffeemischgetränke eine exakte Funktion des Durchflussmengenmessers gewährleistet werden muss, was mit der erfindungsgemäßen Filteranordnung zweifelsohne möglich ist.

Bei einer weiteren vorteilhaften Ausführungsform der erfindungsgemäßen Lösung ist das zweite Filter in einem Rohr angeordnet. Ein solches als Rohrfilter ausgebildetes zweites Filter kann somit beispielsweise bei einem Austausch zusammen mit dem Rohrkörper ausgetauscht werden, wodurch eine Wartung besonders einfach möglich ist.

Zweckmäßig ist der Auslassstutzen als einteiliges, insbesondere sogar als einstückiges, Kunststoffspritzgussteil ausgebildet. Die Ausbildung des Auslassstutzens als einteiliges oder sogar als einstückiges Kunststoffspritzgussteil ermöglicht es, den Auslassstutzen nicht nur kostengünstig, sondern zudem auch äußerst flexibel hinsichtlich Form- und/oder Farbgebung herstellen zu können. Zudem lassen sich mit modernen Kunststoffspritzgusswerkzeugen auch komplexe Kunststoffspritzgussteile kostengünstig fertigen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

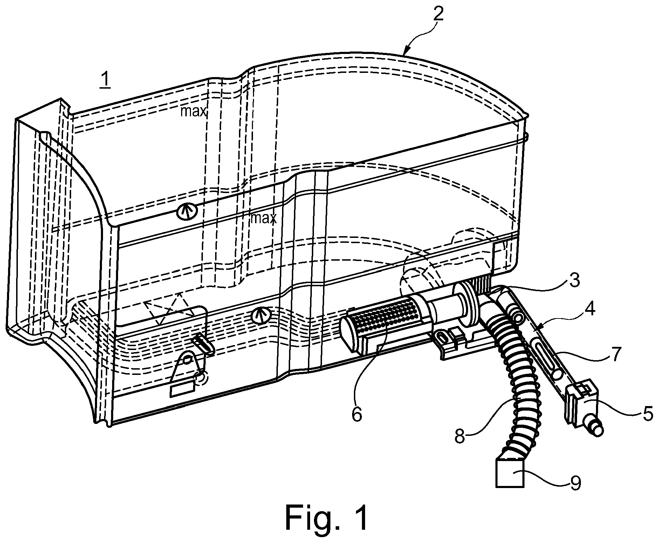

Die einzige Fig. 1 zeigt eine Ansicht auf einen Wassertank eines erfindungsgemäßen Getränkeautomaten mit der erfindungsgemäßen Filteranordnung.

Entsprechend der Fig. 1, weist ein erfindungsgemäßer Getränkeautomat 1, welcher beispielsweise als Kaffeeautomat ausgebildet sein kann, einen Flüssigkeitstank 2 auf, welcher rein theoretisch als Wassertank ausgebildet sein kann. Ausgangsseitig an dem Flüssigkeitstank 2 ist ein Auslassstutzen 3 angeordnet, der über eine Rohrleitung 4 mit einem Durchflussmengenmesser 5 verbunden ist. Stromauf des Auslassstutzens 3 ist dabei ein erstes Filter 6 angeordnet, welches beispielsweise als Vorfilter ausgebildet sein kann. Zwischen dem Auslassstutzen 3 und dem Durchflussmengenmesser 5 ist darüber hinaus ein zweites Filter 7 angeordnet, welches beispielsweise als Feinfilter ausgebildet ist. Auf jeden Fall besitzt das zweite Filter 7 eine geringere Porengröße als das erste Filter 6. Stromab des ersten Filters 6 und stromauf des zweiten Filters 7 mündet zudem noch eine Rücklaufleitung 8 in den Anschlussstutzen 3. Diese Rücklaufleitung 8 kann im weiteren Verlauf mit einem Sicherheitsventil 9 verbunden sein.

Betrachtet man die Fig. 1 nochmals, so kann man erkennen, dass das erste Filter 6 innerhalb des Flüssigkeitstanks 2 angeordnet und dadurch platzsparend und zudem leicht zugänglich untergebracht ist. Auch erhöht die vereinfachte Zugänglichkeit die Reparatur- und Wartungsfreundlichkeit. Eine Anordnung des ersten Filters 6 innerhalb des Flüssigkeitstanks 2 bietet darüber hinaus die Möglichkeit, eine vergleichsweise große Filterfläche ohne zusätzlichen Bauraumbedarf realisieren zu können.

Mit dem erfindungsgemäß ausgebildeten Auslassstutzen 3 und den beiden Filtern 6, 7 kann ein optimaler Schutz des Durchflussmengenmessers 5 vor Verunreinigungen bzw. Schwebstoffen erreicht werden, da beispielsweise die aus dem Flüssigkeitstank 2 entnommene Flüssigkeit zuerst über das erste Filter 6 und anschließend über das zweite Filter 7 gereinigt wird, bevor diese zum Durchflussmengenmesser 5 gelangt. Kommt beispielsweise Flüssigkeit über die Rücklaufleitung 8 von einem Sicherheitsventil 9 zurück, so wird diese bevor sie dem Durchflussmengenmesser 5 erneut zugeführt wird, nochmals durch das zweite Filter 7 geleitet und dadurch erneut gereinigt. Hierdurch kann insbesondere vermieden werden, dass sich beispielsweise in der Brüheinheit oder der Rücklaufleitung 8 gelöste Kalkablagerungen ungefiltert in den Durchflussmengenmesser 5 gelangen und diesen unter Umständen beeinträchtigen oder sogar beschädigen können.

Der Anschlussstutzen 3 ist dabei als einteiliges, insbesondere sogar als einstückiges, Kunststoffspritzgussteil ausgebildet und kann deshalb nicht nur kostengünstig, sondern auch äußerst flexibel hergestellt werden.

### Bezugszeichenliste

- 1: Getränkeautomat
- 2: Flüssigkeitstank
- 3: Anschlussstutzen
- 4: Rohrleitung
- 5: Durchflussmengenmesser
- 6: erstes Filter
- 7: zweites Filter
- 8: Rücklaufleitung
- 9: Sicherheitsventil

## Patentansprüche

1. Getränkeautomat (1) mit einem Flüssigkeitstank (2) und einem Auslassstutzen (3), der über eine Rohrleitung (4) mit einem Durchflussmengenmesser (5) verbunden ist, wobei stromauf des Auslassstutzens (3) ein erstes Filter (6) und zwischen dem Auslassstutzen (3) und dem Durchflussmengenmesser (5) ein zweites Filter (7) angeordnet ist, sodass aus dem Flüssigkeitstank (2) entnommene Flüssigkeit über das erste Filter (6) vorgefiltert und anschließend nach dem Verlassen des Auslassstutzens (3) über das zweite Filter (7) nochmals gereinigt wird, **dadurch gekennzeichnet, dass** in den Auslassstutzen (3) stromab des ersten Filters (6) und stromauf des zweiten Filters (7) eine Rücklaufleitung (8) mündet, sodass Flüssigkeit, die über die Rücklaufleitung (8) von einer Brüheinheit zurück kommt, in den Auslassstutzen (3) eingespeist wird und das zweite Filter (7) nochmals durchläuft.

2. Getränkeautomat nach Anspruch 1, **dadurch gekennzeichnet, dass** das erste Filter (6) innerhalb des Flüssigkeitstanks (2) angeordnet ist.

3. Getränkeautomat nach Anspruch 1 oder 2, **dadurch gekennzeichnet, dass** das zweite Filter (7) eine geringere Porengröße aufweist als das erste Filter (6).

4. Getränkeautomat nach einem der Ansprüche 1 bis 3, **dadurch gekennzeichnet, dass** der Flüssigkeitstank (2) als Wassertank ausgebildet ist.

5. Getränkeautomat nach einem der Ansprüche 1 bis 4, **dadurch gekennzeichnet, dass** die Rücklaufleitung (8) mit einem Sicherheitsventil (9) verbunden ist.

6. Getränkeautomat nach einem der Ansprüche 1 bis 5, **dadurch gekennzeichnet, dass** der Auslassstutzen (3) als einteiliges, insbesondere sogar als einstückiges, Kunststoffspritzgussteil, ausgebildet ist.

## Claims

1. Automatic beverage machine (1) with a liquid tank (2) and an outlet connection (3), which is connected via a conduit (4) to a flow rate meter (5), wherein a first filter (6) is arranged upstream of the outlet connection (3) and a second filter (7) is arranged between the outlet connection (3) and the flow rate meter (5), so that liquid taken from the liquid tank (2) is prefiltered by way of the first filter (6) and after leaving the outlet connection (3) is then cleaned again by way of the second filter (7),
**characterised in that**
a return pipe (8) leads into the outlet connection (3) downstream of the first filter (6) and upstream of the second filter (7) so that liquid that returns from a brewing unit by way of the return pipe (8) is fed into the outlet connection (3) and passes through the second filter (7) again.

2. Automatic beverage machine according to claim 1, **characterised in that** the first filter (6) is arranged within the liquid tank (2).

3. Automatic beverage machine according to claim 1 or 2, **characterised in that** the second filter (7) has a smaller pore size than the first filter (6).

4. Automatic beverage machine according to one of claims 1 to 3, **characterised in that** the liquid tank (2) is embodied as a water tank.

5. Automatic beverage machine according to one of claims 1 to 4, **characterised in that** the return pipe (8) is connected to a safety valve (9).

6. Automatic beverage machine according to one of claims 1 to 5, **characterised in that** the outlet connection (3) is embodied as a one-piece, in particular even integral, plastic injection moulded part.

## Revendications

1. Distributeur automatique de boissons (1) avec un réservoir de fluide (2) et une tubulure de sortie (3), reliée via une conduite (4) à un débitmètre (5), dans lequel un premier filtre (6) est disposé en amont de la tubulure de sortie (3) et un deuxième filtre (7) est disposé entre la tubulure de sortie (3) et le débitmètre (5), de sorte que le fluide prélevé du réservoir de fluide (2) est préfiltré en traversant le premier filtre (6) et ensuite encore épuré en traversant le deuxième filtre (7) après avoir quitté la tubulure de sortie (3), **caractérisé en ce qu'**une conduite de retour (8) débouche dans la tubulure de sortie (3) en aval du premier filtre (6) et en amont du deuxième filtre (7), de sorte que le fluide revenant d'une unité d'échaudage via la conduite de retour (8) est injecté dans la tubulure de sortie (3) et traverse à nouveau le deuxième filtre (7).

2. Distributeur automatique de boissons selon la revendication 1, **caractérisé en ce que** le premier filtre (6) est disposé à l'intérieur du réservoir de fluide (2).

3. Distributeur automatique de boissons selon la revendication 1 ou 2, **caractérisé en ce que** le deuxième filtre (7) présente une taille de pores inférieure à celle du premier filtre (6).

4. Distributeur automatique de boissons selon l'une des revendications 1 à 3, **caractérisé en ce que** le réservoir de fluide (2) est formé sous la forme d'un réservoir d'eau.

5. Distributeur automatique de boissons selon l'une des revendications 1 à 4, **caractérisé en ce que** la conduite de retour (8) est reliée à une soupape de sécurité (9).

6. Distributeur automatique de boissons selon l'une des revendications 1 à 5, **caractérisé en ce que** la tubulure de sortie (3) est formée sous la forme d'une pièce en plastique moulée par injection monobloc, en particulier même en une seule pièce.
